# EUROPÄISCHE PATENTANMELDUNG

(11) **EP 2 386 386 A2**
(43) Veröffentlichungstag der Anmeldung: **16.11.2011**
(21) Anmeldenummer: 11162767.5
(22) Anmeldetag: 18.04.2011
(51) Int. Cl.: B25F 5/02, B29C 45/00

(54) **Funktionseinheit**

(30) Priorität: 11.05.2010 DE 102010028851
(71) Anmelder: Robert Bosch GmbH, 70442 Stuttgart (DE)
(72) Erfinder: Schmid, Lars, 72622, Nuertingen (DE); Henke, Andreas, 71254, Ditzingen (DE); Schnitzler, Johannes, 72760, Reutlingen (DE); Koalick, Jan, 70771, Leinfelden (DE)

(57) **Zusammenfassung**

Es wird eine Funktionseinheit, insbesondere eine Handwerkzeugfunktionseinheit, vorgeschlagen, die zumindest teilweise aus zumindest zwei Schichten (10, 12) unterschiedlicher Materialien zur Einstellung einer definierten Gesamtwärmeausdehnung (14) gebildet ist.

## Beschreibung

### Stand der Technik

Bei Bohr- und Meißelhämmern sind von Steuerhülsen gebildete Handwerkzeugfunktionseinheiten bekannt. Die Steuerhülsen dienen dazu, eine Luftzufuhr in einen Kompressionsraum zwischen einem Kolben und einem Schläger zu steuern. Mit Hilfe der Steuerhülse kann zwischen einem Schlagbetrieb und einem Leerlaufbetrieb umgeschaltet werden. Des Weiteren sind Steuerhülsen für so genannte Schlägerbremsen bekannt, um Schläger in wenigstens einem Betrieb abzubremsen. Für die Funktion der Steuerhülsen, die jeweils gegen einen Außendurchmesser eines aus Metall gefertigten Hammerrohrs, innerhalb dessen der Schläger und/oder der Kolben geführt ist, abzudichten, ist es von Bedeutung, dass ein zwischen dem Hammerrohr und der Steuerhülse erzeugter Dichtspalt unter allen Betriebsbedingungen funktionsfähig bleibt und auch im erwärmten Zustand nur eine begrenzte Leckluftmenge durchlässt. Um genau dies zu erreichen, werden derartige Steuerhülsen aus einem Metall gefertigt, damit diese eine zum Hammerrohr vergleichbare Ausdehnung haben.

### Offenbarung der Erfindung

Es wird eine Funktionseinheit, insbesondere eine Handwerkzeugfunktionseinheit, und zwar vorzugsweise eine Handwerkzeugdichteinheit, eine Handwerkzeuglagereinheit und/oder insbesondere eine Handwerkzeugsteuereinheit, vorgeschlagen, die zumindest teilweise aus zumindest zwei Schichten unterschiedlicher Materialien zur Einstellung einer definierten Gesamtwärmeausdehnung gebildet ist. Dabei soll unter "Einstellung" insbesondere verstanden werden, dass die Schichten gezielt ausgewählt sind, so dass zumindest eine der Schichten gezielt dazu vorgesehen ist, eine Wärmeausdehnung der anderen Schicht zumindest zu reduzieren. Unter einer "Gesamtwärmeausdehnung" soll dabei insbesondere eine Ausdehnung wenigstens einer Funktionsfläche und/oder eines Abstands der Funktionsfläche zu einem definierten Punkt, wie insbesondere ein Radius, verstanden werden, die größer oder insbesondere kleiner ist als wenn die gesamte Funktionseinheit aus dem die Funktionsfläche bildenden Material hergestellt wäre. Die Schichten sind dabei vorzugsweise fest, insbesondere stoffschlüssig verbunden. Durch eine entsprechende Ausgestaltung können einzelne Funktionsflächen der Funktionseinheit besonders vorteilhaft, insbesondere durch unterschiedliche Materialien, auf ihre Funktion ausgelegt und insbesondere können besonders leichte und kostengünstige Konstruktionen erreicht werden. Vorzugsweise weisen die Schichten wesentlich unterschiedliche Wärmeausdehnungskoeffizienten und/oder E-Module auf. Dabei soll unter "wesentlich" zumindest um 10%, bezogen auf den kleineren Wert, differierende Werte verstanden werden. Unter einem "Wärmeausdehnungskoeffizienten" soll insbesondere ein linearer Ausdehnungskoeffizient verstanden werden, der angibt, um welche Längendifferenz im Verhältnis zu einer bestimmten Gesamtlänge sich ein fester Körper bei einer Temperaturänderung von einem Kelvin, insbesondere ausgehend von 20°C, verändert.

Die Funktionseinheit kann verschiedene, dem Fachmann als sinnvoll erscheinende Formen aufweisen. Insbesondere kann eine entsprechende Funktionseinheit überall dort eingesetzt werden, wo an einer ausgewählten Funktionsfläche einer Baugruppe eine Wärmeausdehnung erreicht werden soll, die größer oder insbesondere kleiner sein soll als eine Wärmeausdehnung, wenn die Funktionseinheit nur aus einem Material hergestellt wäre. Besonders vorteilhaft ist die Funktionseinheit jedoch als Hülse ausgebildet. Bei einer entsprechenden Ausbildung können insbesondere zumindest eine innere und eine äußere Schicht ausgebildet werden, um die Gesamtwärmeausdehnung, insbesondere eine dadurch bedingte Innendurchmesserveränderung, einzustellen. Bei einer Hülse können ferner vorteilhafte, eine Wärmeausdehnung reduzierende Spannungsverhältnisse erreicht werden.

In einer weiteren Ausgestaltung der Erfindung wird vorgeschlagen, dass eine der Schichten eine Wälz- und/oder Gleitlagerfläche bildet und die die Wälz- und/oder Gleitlagerfläche bildende Schicht einen höheren Wärmeausdehnungskoeffizienten aufweist als die wenigstens eine andere Schicht, wodurch vorteilhaft erreicht werden kann, dass bei einer Erwärmung der Funktionseinheit sich eine eine Wärmeausdehnung reduzierende innere Spannung in der Funktionseinheit einstellt. Insbesondere kann bei einer Ausbildung der Funktionseinheit als Hülse erreicht werden, dass eine äußere Schicht eine Ausdehnung einer inneren Schicht reduziert. Unter einer "Wälz- und/oder Gleitlagerfläche soll insbesondere eine Fläche verstanden werden, die gezielt dazu vorgesehen ist, im verbauten Zustand hierfür genutzt zu werden und die insbesondere eine kleinere Roll-und/oder Gleitreibung, insbesondere bezogen auf Metall, aufweist, als eine andere Fläche der Funktionseinheit.

Ferner können vorteilhafte Spannungsverhältnisse bei einer Erwärmung der Funktionseinheit erreicht werden, wenn eine der Schichten eine Wälz- und/oder Gleitlagerfläche aufweist und die wenigstens eine andere Schicht ein höheres E-Modul aufweist als die die Wälz- und/oder Gleitlagerfläche bildende Schicht. Die Wälz- und/oder besonders vorteilhaft die Gleitlagerfläche bildende Schicht wird dabei vorzugsweise von einer inneren Schicht einer als Hülse ausgebildeten Funktionseinheit gebildet.

Ist wenigstens eine Schicht wenigstens teilweise aus Kunststoff gebildet, können insbesondere vorteilhaft leichte und kostengünstige Konstruktionen erreicht werden.

Ferner wird vorgeschlagen, dass wenigstens eine der Schichten aus einem faserverstärkten Kunststoff gebildet ist, wodurch vorteilhaft langlebige und robuste Konstruktionen erreicht werden können. Vorzugsweise ist bei einer als Hülse ausgebildeten Funktionseinheit wenigstens eine äußere Schicht von einem faserverstärkten Kunststoff gebildet.

Sind die zumindest zwei Schichten in einem Mehrkomponentenspritzverfahren hergestellt, kann eine kostengünstige und einfache Herstellung ermöglicht werden. Dabei soll unter einem "Mehrkomponentenspritzverfahren" insbesondere verstanden werden, dass beide Schichten durch ein Spritzverfahren hergestellt sind und insbesondere eine Schicht durch ein Spritzverfahren mit der anderen Schicht verbunden ist.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte Handwerkzeugmaschine und
- Fig. 2: einen schematisch dargestellten Ausschnitt einer Steuerhülse aus Figur 1 bei einer Raumtemperatur und den Ausschnitt der Steuerhülse bei einer Betriebstemperatur.

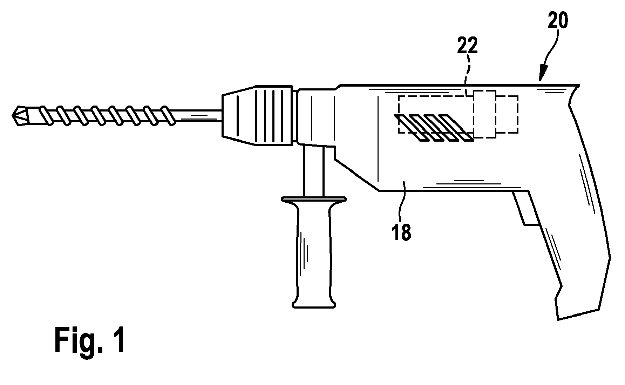

Figur 1 zeigt eine von einem Bohr- und Meißelhammer gebildete Handwerkzeugmaschine mit einer erfindungsgemäßen Handwerkzeugfunktionseinheit. Die Handwerkzeugmaschine weist ein Gehäuse 18 und einen im Gehäuse 18 angeordneten Elektromotor auf. Im Gehäuse 18 ist ein Schlagwerk 20 der Handwerkzeugmaschine angeordnet. Das Schlagwerk 20 weist ein Hammerrohr 22 und einen im Hammerrohr 22 geführten, nicht näher dargestellten Kolben auf, der vom Elektromotor translatorisch antreibbar ist.

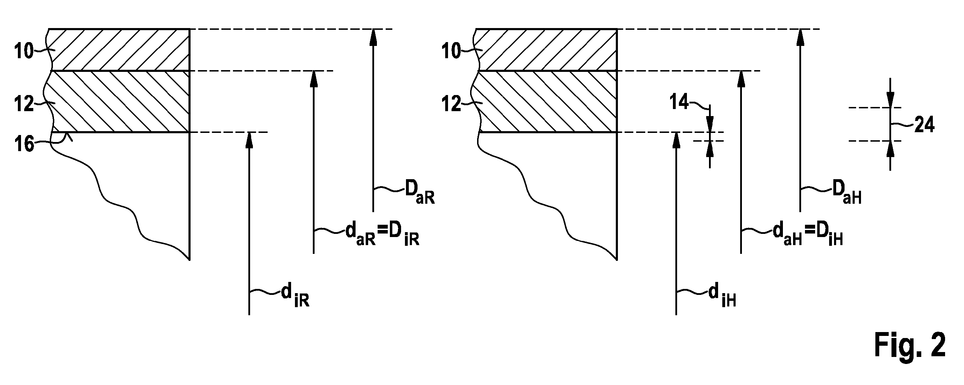

Das Schlagwerk 20 weist ferner eine erfindungsgemäße Handwerkzeugfunktionseinheit auf, und zwar eine Handwerkzeugsteuereinheit. Die Handwerkzeugfunktionseinheit wird von einer Steuerhülse gebildet. Die Steuerhülse ist auf dem Hammerrohr 22 translatorisch verschiebbar gelagert und dient dazu, eine Luftzufuhr in einen Kompressionsraum zwischen dem Kolben und einem im Hammerrohr 22 gelagerten Schläger zu steuern. Mit Hilfe der Steuerhülse kann zwischen einem Schlagbetrieb und einem Leerlaufbetrieb umgeschaltet werden. Die Handwerkzeugfunktionseinheit ist aus zwei konzentrischen Schichten 10, 12, und zwar aus einer radial inneren Schicht 12 und einer radial äußeren Schicht 10, unterschiedlicher Materialien zur Einstellung einer definierten Gesamtwärmeausdehnung 14 gebildet (Figuren 1 und 2). Die Schichten 10, 12 bilden konzentrische Hülsen. Die radial innere Schicht 12 bildet eine Gleitlagerfläche 16, über die die Steuerhülse auf dem Hammerrohr 22 gelagert ist. Die radial innere Schicht 12 weist einen höheren Wärmeausdehnungskoeffizienten auf als die radial äußere Schicht 10. Die radial äußere Schicht 10 weist ein höheres E-Modul auf als die radial innere Schicht 12.

Die Schichten 10,12 sind aus Kunststoff und die Steuerhülse ist in einem Mehrkomponentenspritzverfahren hergestellt. Um ein vorteilhaftes E-Modul in der radial äußeren Schicht 10 zu erreichen, wird diese von einem faserverstärkten Kunststoff gebildet.

Weist die Steuerhülse durchgängig eine Temperatur von 20°C auf, weist die radial innere Schicht 12 einen Innendurchmesser d_{iR} und einen Außendurchmesser d_{aR} auf (Figur 2). Die radial äußere Schicht 10 weist dabei einen mit dem Außendurchmesser d_{aR} der radial inneren Schicht 12 übereinstimmenden Innendurchmesser D_{iR} und einen Außendurchmesser D_{aR} auf. Findet im Betrieb eine Erwärmung des Hammerrohrs 22 und der Steuerhülse auf eine Betriebstemperatur statt, weist die radial innere Schicht 12 einen Innendurchmesser d_{iH} und einen Außendurchmesser d_{aH} auf und die radial äußere Schicht 10 weist einen mit dem Außendurchmesser d_{aH} der radial inneren Schicht 12 übereinstimmenden Innendurchmesser D_{iH} und einen Außendurchmesser D_{aH} auf, die jeweils größer sind als bei der Temperatur von 20°C. Bei der Erwärmung weist die radial innere Schicht 12 ein größeres Bestreben auf sich auszudehnen als die radial äußere Schicht 10. Dies führt dazu, dass sich die radial äußere Schicht 10 zusätzlich zu einer Erwärmung aufgrund einer von der radial inneren Schicht 12 in der radial äußeren Schicht 10 hervorgerufenen Druckspannung ausdehnt. Die radial innere Schicht 12 wird durch die radial äußere Schicht 10 an ihrer Ausdehnung behindert. Dies führt zu einem gewünschten Effekt, und zwar dass die temperaturbedingte Gesamtwärmeausdehnung 14, die im vorliegenden Fall einer temperaturbedingten Aufweitung des inneren Durchmessers d_{iR} auf einen Durchmesser d_{iH} entspricht, deutlich geringer ausfällt als eine theoretische Wärmeausdehnung 24, wenn die gesamte Steuerhülse vollständig aus dem Material der inneren Schicht 12 gefertigt wäre. Die Gesamtwärmeausdehnung 14 entspricht einer Ausdehnung, wenn die gesamte Steuerhülse vollständig aus Stahl gefertigt wäre, insbesondere entspricht die Gesamtwärmeausdehnung 14 einer Ausdehnung eines Außendurchmessers des Hammerrohrs 22 bei einer Erwärmung von 20° auf die Betriebstemperatur.

## Patentansprüche

1. Funktionseinheit, insbesondere Handwerkzeugfunktionseinheit, die zumindest teilweise aus zumindest zwei Schichten (10, 12) unterschiedlicher Materialien zur Einstellung einer definierten Gesamtwärmeausdehnung (14) gebildet ist.

2. Funktionseinheit nach Anspruch 1,
**gekennzeichnet durch**
die Ausbildung als Hülse.

3. Funktionseinheit nach einem der vorhergehenden Ansprüche,
**dadurch gekennzeichnet,**
**dass** eine der Schichten (12) eine Wälz- und/oder Gleitlagerfläche (16) bildet und die die Wälz- und/oder Gleitlagerfläche (16) bildende Schicht (12) einen höheren Wärmeausdehnungskoeffizienten aufweist als die wenigstens eine andere Schicht (10).

4. Funktionseinheit nach einem der vorhergehenden Ansprüche,
**dadurch gekennzeichnet,**
**dass** eine der Schichten (12) eine Wälz- und/oder Gleitlagerfläche (16) bildet und die wenigstens eine andere Schicht (10) ein höheres E-Modul aufweist als die die Wälz- und/oder Gleitlagerfläche (16) bildende Schicht (10).

5. Funktionseinheit nach einem der vorhergehenden Ansprüche,
**dadurch gekennzeichnet,**
**dass** wenigstens eine der Schichten (10, 12) wenigstens teilweise aus Kunststoff gebildet ist.

6. Funktionseinheit nach Anspruch 5,
**dadurch gekennzeichnet,**
**dass** wenigstens eine der Schichten (10) aus einem faserverstärkten Kunststoff gebildet ist.

7. Funktionseinheit nach Anspruch 5 oder 6,
**dadurch gekennzeichnet,**
**dass** die zumindest zwei Schichten (10, 12) in einem Mehrkomponentenspritzverfahren hergestellt sind.

8. Handwerkzeug, insbesondere Bohr- und/oder Meißelhammer, mit einer Funktionseinheit nach einem der vorhergehenden Ansprüche.
